# EUROPEAN PATENT SPECIFICATION

(11) **EP 1 645 446 B1**
(45) Date of publication and mention of the grant of the patent: **16.07.2008**
(21) Application number: 04425747.5
(22) Date of filing: 06.10.2004
(51) Int. Cl.: B60H 1/00, H02K 5/24, F04D 29/28

(54) **Motor support housing for a fan assembly for vehicle air treatment systems**
Haltergehäuse für einen Gebläsemotor einer Klimaanlage eines Kraftfahrzeugs
Boîtier de support de moteur pour ventilateur de climatisation de véhicule

(43) Date of publication of application: 12.04.2006
(73) Proprietor: DENSO THERMAL SYSTEMS S.p.A., 10046 Poirino (Torino) (IT)
(72) Inventor: Balzo, Michele c/o Denzo Thermal Systems Spa, 10046 Poirino (Torino) (IT); Bazzani, Roberto c/o Denzo Thermal Systems Spa, 10046 Poirino (Torino) (IT); Campana, Oscar c/o Denzo Therman Systems Spa, 10046 Poirino (Torino) (IT); Carbone, Andrea c/o Denzo Thermal Systems Spa, 10046 Poirino (Torino) (IT); Nalon, Massimo c/o Denzo Thermal Systems Spa, 10046 Poirino (Torino) (IT)
(74) Representative: Marchitelli, Mauro

(56) References cited:
- EP-A- 0 847 127
- DE-A- 19 746 185
- FR-A- 2 606 562
- US-A- 2 623 735

## Description

The present invention relates to air treatment systems for vehicles. Air treatment systems for vehicles are normally provided with a fan assembly with variable speed which produces a flow of air that, after a possible heating and/or cooling/dehumidification treatment, is sent into the passenger compartment of the vehicle. The fan assembly includes a housing made of injection moulded plastic material provided with a seat within which is mounted an electric motor bearing a centrifugal fan.

The present invention specifically relates to the motor support housing of such a fan assembly. The housing is normally made of injection moulded rigid plastic material and has a lateral wall and a bottom wall provided with holes for screws able to fasten the motor to the housing. The European patent application no. 03021292.2 by the same Applicant (not yet published as of the filing date of the present application) describes a fan assembly for vehicle air treatment systems including a housing made of injection moulded plastic material having a seat within which is housed an electric motor bearing a fan. The housing comprises fastening elements formed by over-injection of a second material, softer than the material constituting the housing. Said fastening elements extend coaxially to the openings for the screws for fastening the motor to the housing.

The solution described in European patent application 03021292.2 is suited in the case of motors with a bottom made of plastic material with threaded fastening holes. In other applications, the motor is provided with a metal plate bottom with non threaded fastening holes. In this case, self-threading fastening screws are used to fasten the motor to the support housing. In this second application, it is necessary to provide rigid spacer bushings between the motor and the bottom wall of the housing. In known solutions, the spacer bushings made of rigid material are separate components and are mounted between the motor and the housing before inserting the fastening screws.

Document DE 197 46 185, which is considered as the closest prior art, discloses a motor support housing having tubular spacer elements with an opening destined to receive a respective fastening screw, wherein the spacer elements are formed of soft plastic material over-injected over the rigid plastic material forming the support housing.

The object of the present invention is to provide a motor support assembly with a lower number of components and which simplifies the assembly method.

According to the present invention, said object is achieved by a motor support housing having the characteristics set out in the claim 1.

The solution according to the present invention enables to avoid the aforesaid bushings with motors having a metal plate bottom. While it is particularly advantageous when used with motors having a metal plate bottom, the support housing according to the present invention is also usable with motors having a plastic bottom.

The characteristics and the advantages of the present invention shall become readily apparent in the detailed description that follows, provided purely by way of non limiting example, in which:
- Figure 1 is a plan view of a motor support housing according to the present invention,
- Figures 2 and 3 are sections respectively according to the lines II-II and III-III of Figure 1,
- Figure 4 is a plan view similar to Figure 1, showing the motor support housing during an intermediate moulding stage, and
- Figures 5 and 6 are sections respectively according to the lines IV-IV and VI-VI of Figure 4.

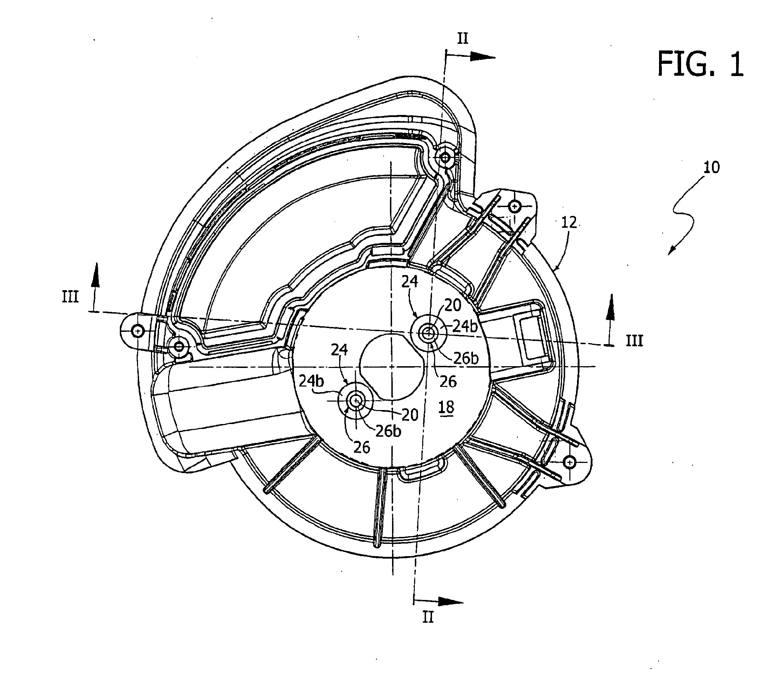

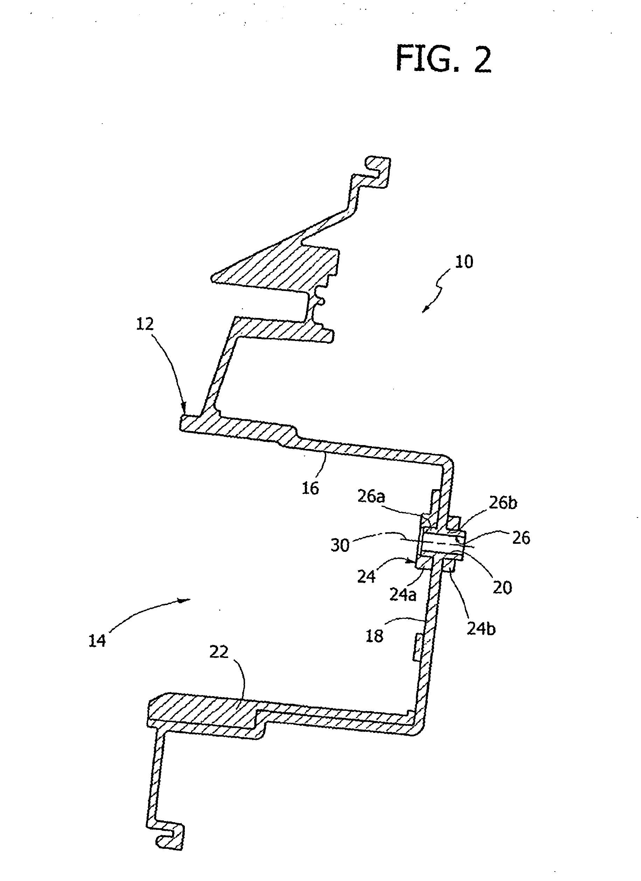

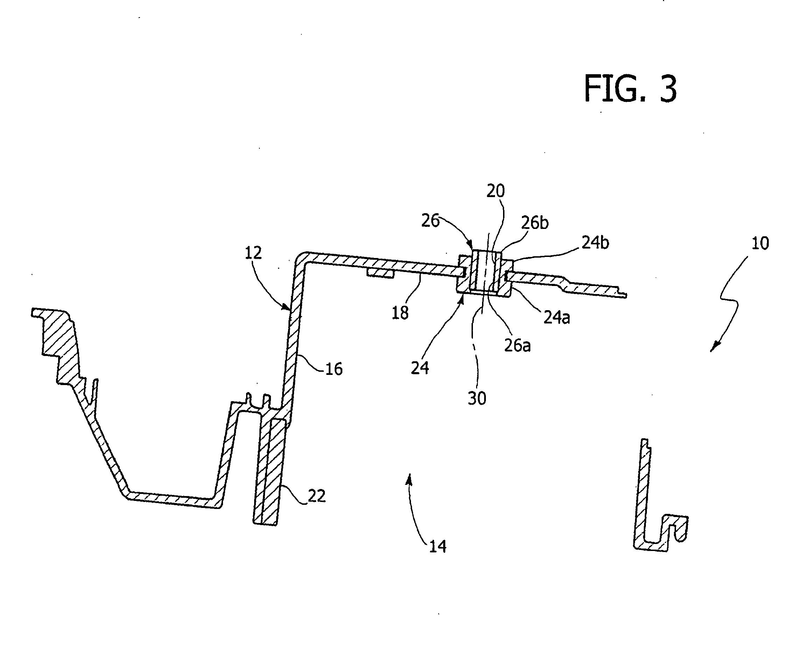

With reference to Figures 1 through 3, the reference number 10 designates a motor support housing for a fan assembly for vehicle air treatment systems. The housing 10 comprises a body 12 of injection moulded rigid plastic material. The body 12 has a seat 14 in which is housed an electric motor (not shown) bearing a centrifugal fan. The seat 14 has a lateral wall 16 and bottom wall 18 formed in a single piece.

The bottom wall 18 is provided with openings 20 for screws (not illustrated) able to fasten the electric motor to the housing 10.

According to the invention, the housing 10 is provided with dampening elements 22, 24 made of softer material than the plastic material constituting the body 12. The dampening element 22, 24 are formed by over-injection of soft plastic material on the body 12. The elements 22, 24 can be formed as described in detail in European patent application no. 03021292.2 by the same Applicant. The dampening elements 22 have the shape of longitudinal ribs projecting towards the interior of the lateral wall 16. The dampening elements 24 have the shape of bushings with circular section coaxial to the openings 20 for the fastening screws.

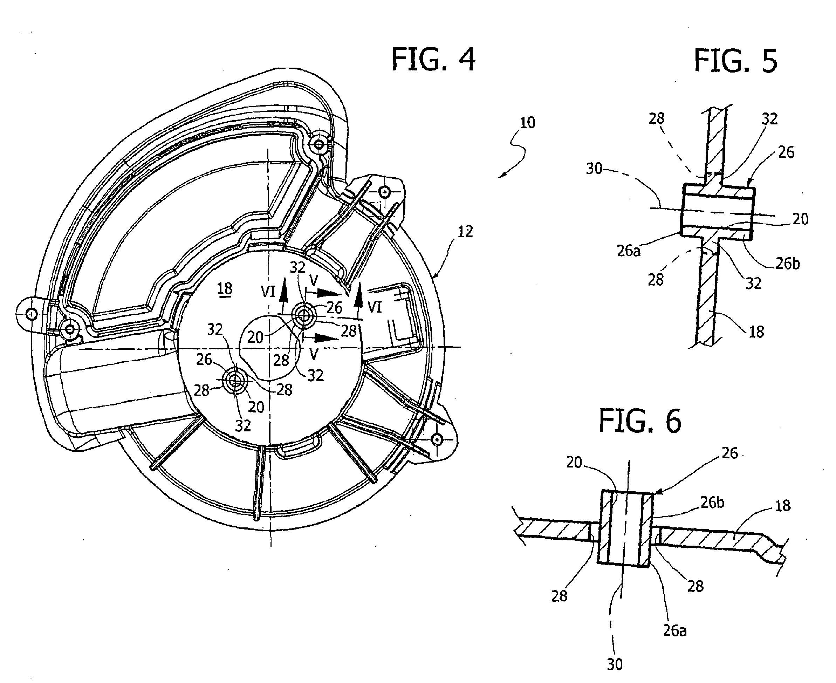

Figures 4, 5 and 6 show the body 12 of the motor support housing according to the present invention at the end of the injection moulding of the rigid plastic material forming the body 12 and before the over-injection of the soft plastic material forming the dampening elements 22, 24. With reference to Figures 4 through 6, the bottom wall 18 of the body 12 comprises an integral spacer element 26 positioned in correspondence with each of the openings 20 for the fastening screws. Each integral spacer element 26 is obtained integrally by moulding with the body 12 and it is constituted by the same rigid plastic material of the body 12. Each integral spacer element 26 has a tubular shape with an opening which constitutes the opening 20 for the passage of the respective fastening screw. The spacer element 26 extends transversely with respect to the bottom wall 18 and has an inner portion 26a which projects from the inner surface of the wall 18 and an outer portion 26b which projects from the outer surface of the wall 18. Each spacer element 26 is surrounded by two through grooves 28 with semi-circular shape, concentric relative to the axis 30 of the spacer element 26. Each spacer element 26 is connected to the bottom wall by means of two integral bridge-like elements 32. The bridge-like elements 32 which connect each spacer element 26 to the bottom wall 18 have a height equal to the thickness of the wall 18, a width equal to the width of the grooves 28 and a thickness that is preferably smaller than the wall thickness of the spacer elements.

With reference to Figures 1 through 3, the dampening elements 24 made of soft plastic material over-injected with respect to the body 12 surround the respective spacer elements 26. Each dampening element 24 has an inner portion 24a which surrounds the inner portion 26a of the respective spacer element 26 and an outer portion 24b which surrounds the outer portion 26b of the spacer element 26. The portions 24a and 24b of the dampening element 24 are mutually connected by integral connecting portions which extend through the arched through grooves 28 which surround the respective spacer element 26. The inner portion 24a of each dampening element 24 projects towards the interior to a greater extent than the inner portion 26a of the spacer element in such a way that the inner front surface of the deformable element 24 in use is compressed against the bottom wall of the electric motor during the tightening of the screw inserted through the opening 20 of the spacer element 26. The portion 24a of the dampening element 24 in use is compressed between the inner surface of the bottom wall 18 and the outer surface of the bottom wall of the electric motor.

The outer portion 24b of the dampening element 24 has a smaller height than the corresponding outer portion 26b of the spacer element 26 in such a way as to leave uncovered an end part of the spacer element 26 to bear against the head of the fastening screw.

The solution according to the present invention avoids separate spacer elements to be positioned between the motor and the bottom wall 18 of the housing 10. Moreover, with the over-injection of the dampening elements 24 made of soft plastic material, separate dampening bushings are avoided. The present invention therefore allows to reduce the number of components and to simplify the procedure for mounting the fan assembly.

## Claims

1. A motor support housing (10) for a fan assembly for vehicle air treatment systems, comprising a seat (14) able to house an electric motor, the seat having a lateral wall (16) and a bottom wall (18) made of injection moulded rigid plastic material, in which the bottom wall (18) is provided with holes (20) for screws able to fasten the motor to the housing, wherein the housing (10) is provided with spacer elements (26) coaxial to said openings (20) and having a tubular shape with an opening (20) destined to receive a respective fastening screw,
**characterised in that** the spacer elements (26) are formed integrally with the bottom wall (18) from the same rigid plastic material constituting the housing (10), each spacer element (26) being surrounded by two through grooves (28) having semi-circular shape, concentric with respect to the axis (30) of the spacer element (26), each spacer element (26) being connected to the bottom wall (18) by means of two integral bridge-like elements (32), a dampening element (24) made of soft plastic material being over-injected around each of said spacer elements (26), each of said dampening elements (24) having an inner portion (24a) and an outer portion (24b) mutually connected by an integral connecting portion which extends through said semi-circular grooves (28).

2. Housing as claimed in claim 1, **characterised in that** each of said integral bridge-like elements (32) has a height equal to the thickness of the bottom wall (18), a length equal to the length of said semi-circular grooves (28) and a thickness that is smaller than the wall thickness of the spacer element (26).

3. Housing as claimed in claim 1, **characterised in that** each spacer element (26) has an inner portion (26a) projecting from the inner surface of the bottom wall (18) and an outer wall (26) projecting from the outer surface of the bottom wall (18).

4. Housing as claimed in claim 1, **characterised in that** each of said spacer elements (26) extends orthogonally to the bottom wall (18).

## Patentansprüche

1. Haltergehäuse (10) für einen Gebläsemotor einer Fahrzeugklimaanlage, mit einem Sitz (14) zur Aufnahme eines Elektromotors, wobei der Sitz eine Seitenwand (16) und eine Bodenwand (18) aus spritzgegossenem, festem Kunststoffmaterial aufweist, in dem die Bodenwand (18) mit Löchern (20) für Schrauben zum Befestigen des Motors am Gehäuse versehen ist, wobei das Gehäuse (10) mit zu den Öffnungen (20) koaxialen Distanzelementen (26) versehen ist, die eine rohrförmige Gestalt mit einer Öffnung (20) zur Aufnahme einer entsprechenden Befestigungsschraube aufweisen,
**dadurch gekennzeichnet, dass**
die Distanzelemente (26) integral mit der Bodenwand (18) aus dem gleichen festen Kunststoffmaterial ausgebildet sind, welches das Gehäuse (10) bildet, wobei jedes Distanzelement (26) von zwei durchgehenden Nuten (28) mit halbkreisförmiger Gestalt umgeben ist, welche konzentrisch zur Achse (30) des Distanzelements (26) sind, und jedes Distanzelement (26) mit der Bodenwand (18) mittels zweier integraler, brückenartiger Elemente (32) verbunden ist, wobei ein Dämpfungselement (24) aus weichem Kunststoffmaterial um jedes der Distanzelemente (26) überspritzt ist und jedes der Dämpfungselemente (24) einen inneren Teil (24a) und einen äußeren Teil (24b) aufweist, die gegenseitig durch einen integralen Verbindungsabschnitt verbunden sind, der sich durch die halbkreisförmigen Nuten (28) erstreckt.

2. Gehäuse nach Anspruch 1, **dadurch gekennzeichnet, dass** jedes der integralen, brückenartigen Elemente (32) eine der Dicke der Bodenwand (18) gleiche Höhe, eine der Länge der halbkreisförmigen Nuten (28) gleiche Länge und eine Dicke besitzt, die kleiner als die Wandstärke des Distanzelements (26) ist.

3. Gehäuse nach Anspruch 1, **dadurch gekennzeichnet, dass** jedes Distanzelement (26) einen von der Innenfläche der Bodenwand (18) abstehenden Innenteil (26a) und eine Außenwand (26) aufweist, die von der Außenfläche der Bodenwand (18) absteht.

4. Gehäuse nach Anspruch 1, **dadurch gekennzeichnet, dass** sich jedes der Distanzelemente (26) orthogonal zur Bodenwand (18) erstreckt.

## Revendications

1. Carter de support de moteur (10) pour un ensemble ventilateur pour des systèmes de traitement d'air de véhicule, comprenant un siège (14) capable de loger un moteur électrique, le siège possédant une paroi latérale (16) et une paroi inférieure (18) faites de matériau plastique rigide moulé par injection, dans lequel la paroi inférieure (18) est pourvue d'orifices (20) pour des vis capables de fixer le moteur au carter, dans lequel le carter (10) est pourvu d'éléments formant entretoise (26) coaxiaux avec lesdites ouvertures (20) et possédant une forme tubulaire avec une ouverture destinée à recevoir une vis de fixation respective,
**caractérisé en ce que** les éléments formant entretoise (26) sont formés d'un seul tenant avec la paroi inférieure (18) à partir du même matériau plastique rigide constituant le carter (10), chaque élément formant entretoise (26) étant entouré par deux rainures traversantes (28) possédant une forme semi-circulaire, concentriques par rapport à l'axe (30) de l'élément formant entretoise (26), chaque élément formant entretoise (26) étant relié à la paroi inférieure (18) au moyen de deux éléments solidaires en forme de pont (32), un élément amortisseur (24) fait de matériau plastique mou étant surinjecté autour de chacun desdits éléments formant entretoise (26), chacun desdits éléments amortisseurs (24) possédant une partie intérieure (24a) et une partie extérieure (24b) reliées mutuellement par une partie de liaison solidaire qui s'étend à travers lesdites rainures semi-circulaires (28).

2. Carter selon la revendication 1, **caractérisé en ce que** chacun desdits éléments solidaires en forme de pont (32) possède une hauteur égale à l'épaisseur de la paroi inférieure (18), une longueur égale à la longueur desdites rainures semi-circulaires (28) et une épaisseur qui est inférieure à l'épaisseur de paroi de l'élément formant entretoise (26).

3. Carter selon la revendication 1, **caractérisé en ce que** chaque élément formant entretoise (26) possède une partie intérieure (26a) faisant saillie à partir de la surface intérieure de la paroi inférieure (18) et une paroi extérieure (26) faisant saillie à partir de la surface extérieure de la paroi inférieure (18).

4. Carter selon la revendication 1, **caractérisé en ce que** chacun desdits éléments formant entretoise (26) s'étend de façon orthogonale par rapport à la paroi inférieure (18).
